# EUROPEAN PATENT SPECIFICATION

(11) **EP 1 138 190 B1**
(45) Date of publication and mention of the grant of the patent: **19.05.2004**
(21) Application number: 01202452.7
(22) Date of filing: 01.12.1995
(51) Int. Cl.: A01F 15/10

(54) **A bale press and a method of processing crop**
Ballenpresse und Verfahren um das Halmgut zu bearbeiten
Presse à balles et méthode pour conditionner la récolte

(30) Priority: 02.12.1994 NL 9402033
(43) Date of publication of application: 04.10.2001
(62) Divisional of application: 95203318.1
(73) Proprietor: MAASLAND N.V., 3147 PA Maassluis (NL)
(72) Inventor: Van der Lely, Cornelis, 6300 ZUG (CH)
(74) Representative: Corten, Maurice Jean F.M.

(56) References cited:
- EP-A- 0 341 508
- WO-A-92/09191
- DE-A- 3 004 431
- DE-A- 3 302 111
- DE-A- 4 102 034
- GB-A- 2 003 717
- GB-A- 2 032 376

## Description

The present invention relates to a bale press according to the preamble of claim 1.

Such a bale press is described in EP-A-0 341 508. The present invention has for its object to provide an alternative bale press. This is done by means of the characterizing features of claim 1. By means of the invention the outlines of the surface of the soil can be followed, while a regular crop processing without mechanical complications is maintained. According to an aspect of the invention, the space device is adjustable in its longitudinal direction. According to an other aspect of the invention, the crop picked up from the soil by a pick-up member can be crushed by a crushing device that is drivable at various circumferential speeds, while the drive of the chopping device is independently variably adjustable. In a particular embodiment according to the invention, the chopping device is provided with knives, such as "flail" knives, that are arranged pivotably about a shaft extending horizontally and transversely to the direction of travel.
Figure 1 shows, in a side view, a bale press, and
Figure 2 is a plan view of Figure 1.

Corresponding elements in the drawings are indicated by the same reference numerals. Besides, the invention is by no means restricted to the embodiment shown and described; it only serves to illustrate the inventive idea.

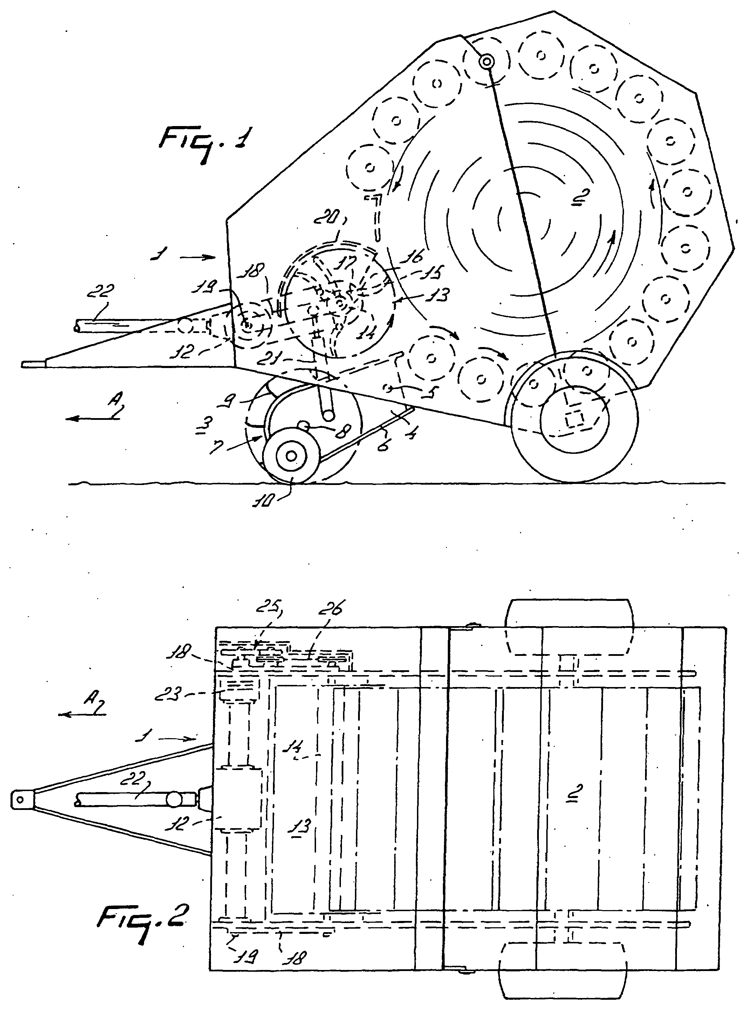

Figure 1 shows a bale press 1, represented as a round-baler including a permanent bale chamber 2. However, the invention to be described also relates to a bale press having a variable bale chamber. Near its front side, the bale press 1 comprises a pick-up member or pick-up device 3 which, in accordance with the present invention, has a width corresponding to that of the bale press. Near its sides that are lateral relative to the direction of travel A and via arms 4 that are orientated in the direction of travel, the pick-up member 3 is connected to the frame of the machine. About a shaft 5, the aforementioned arms are pivotably connected to the frame.

The pick-up member 3 comprises a guide grate 7 consisting of rod-shaped elements 6, that are juxtaposed in the direction of travel. These elements 6 are bent in U-shape and their legs extend, relative to the direction of travel, rearwardly and slightly vertically, while the basis of the U-shape, that is turned off roundly, constitutes the front of the pick-up member 3. Tine-shaped pick-up elements 9, which are rotatable about a shaft 8 situated inside the grate elements 6, move between the rod-shaped elements 6 of the grate 7. The tines are disposed in such a way that their orbits extend at least along the round part of the guide grate 7 and partly along the plain upper part thereof. Near its front end and at its two lateral ends, the pick-up element 3 is supported by a wheel 10, so as to be capable of following possible unevennesses in the surface of the soil.

For its drive, the machine includes a gear box 12, which is connected via a coupling shaft 22 to the power take-off shaft of a tractor. In the present embodiment, the gear box 12 is also provided with a square transmission and an exit for the drive of a processing member 13, that is situated substantially above the pick-up member 3. The processing member 13 includes in its centre a tubular carrier 14 which is provided with knives 15 in the form of so-called "flail" or clapper knives, that are disposed regularly interspaced along its circumference. The "flail" knives are pivotable about a pivot shaft 16 orientated horizontally and transversely to the direction of travel A. Via a radially extending support 17, this shaft 16 is connected to the carrier 14. Near the sides of the machine 1 that are lateral relative to the direction of travel A, the processing member or device 13 is connected to the frame via arms 18 extending substantially horizontally and in the direction of travel A. The foremost pivot point thereof is situated approximately above the front side of the pick-up member 3. At the upper side of this processing member 13 there is provided a drum-shaped wall part 20, which has a protective function and prevents crop, that may catch on the member 13, from being flung out of the machine. Between an arm 18 for the processing member 13 and an arm 4 for the pick-up member 3, there is arranged a spacer device 21, which is pivotable, near its two ends, about a pivot shaft orientated horizontally and transversely to the direction of travel A. According to the invention, this spacer device is adjustable in its longitudinal direction and, preferably, is designed as a hydraulic cylinder. The pick-up member 3, the spacer device 21 and the processing member 13 together form a processing implement for crop lying on the soil.

The drive of the processing member 13 comprises a drive shaft which extends from the central gear box 12 horizontally and transversely to the direction of travel to the foremost pivot point 19 of one of the two arms 18 of the processing member 13. According to the invention, there is provided, in alignment with this transmission shaft, a coupling 23, which can be switched on, respectively switched off. Against the outside of the arm 18 along which the drive for the processing member 13 extends, there is attached a gear box 25, via which is driven a first transmission wheel that is bearing-supported against the relevant arm 18 and, via a flexible transmission element 26 constituted in the present embodiment by a V-rope, is connected with a second transmission wheel provided on the shaft of the processing member 13. However, according to the invention, other forms of transmission, such as a gear chain, are applicable as well.

The operation of the machine will be explained in what follows.

During operation of the bale press 1, crop usually lying in swaths on the soil is picked up by the pick-up member 3, in particular by the tines 9 that are rotating forwardly and upwardly near the soil, and pushed along the grate 7 upwardly and rearwardly to the bale chamber 2. In the present bale chamber, the collected crop is compressed by rollers rotating in the direction of the pick-up member and constituting the wall of the bale chamber. In the present machine, the picked up crop can optionally undergo an additional processing by means of the processing member 13, in which case, when the crop consists of long grass or maize stems, it will be beaten short by the rotating "flail" knives 15, or, depending on the driving rate and the type of knives, will be crushed and be provided at the same time with an extra impulse in the direction of the bale chamber 2. The processing member 13 is disposed in such a way that its orbit is situated in the immediate vicinity of that of the pick-up elements 9 and of the guide grate 7. Depending on the type and quantity of the crop supplied, it is possible, with the aid of the length-adjustable spacer device 21, to adjust a greater distance relative to the grate and the pick-up member 3. Furthermore, the spacer device 21 enables a regular processing of the crop lying on the grate 7, because of the fact that it brings about a simultaneous upward or downward movement of the chopping member 13 and the pick-up member 3. This is particularly important when the pick-up member 3, via its support wheels 10, follows unevennesses in the surface of the soil. In a second function, the spacer device 21 ensures that the pick-up member 3 and the chopping member 13 do not contact each other when the pick-up member 3, in following the surface of the soil, moves in upward direction. A third function of the spacer device 21 is causing the chopping member 13 to pivot into a non-operative position, the distance between the chopping member 13 and the pick-up member 3 then being such that picked-up crop is pushed into the bale chamber 2 without the intervention of the chopping member 13. Additionally, the chopping member 13 is capable of being switched off by means of the coupling 23. A further adaptation of the machine to the type of crop or the circumstances is possible by changing the transmission ratio by means of changing gear wheels in the gear box 25.

An advantage of the present invention is that the same bale press 1 is applicable for various operations, e.g. for compressing maize stems, but also hay, grass and straw, into bales. This suits to the wish to be able, in practice, to process easily a very large soilage production, i.e. including the possibility to store the soilage in a silo. Consequently, the soilage will be better processable in the cowshed and, when it has been chopped additionally, will be easier to handle and easier to be digested by the cows. Such a method enables at the same time a wider application of the same machine, because it is also adapted to process maize stems as well as crop either to be chopped or not. For example, during the use of the machine according to the invention for one season on the Northern Hemisphere, the following results have been obtained. Upon starting the use of the machine in April, the chopping member 13 can be switched off. The grass to be harvested in this time of year is still short and can be compressed into bales in the cowshed or be stored in the silo. In May and June, there can be processed hay by the baler 1 without the chopper 13 being used. In July, when the grass is longer, it can be harvested for storage in a silo while making use of the chopper 13. In August, there can be processed straw by the baler 1 without making use of the chopper 13. In September and October, there can be harvested maize while making use of the chopper 13 and, if desired, long crop can also be ensilaged after having been chopped. During operation, the change gear box 25 can always be adjusted in such a way that the crop is chopped or crushed to a greater or a lesser extent.

The invention is not restricted to the aforementioned description, but also relates to all the details of the drawings. Furthermore, the invention relates to all kinds of alternatives in the construction, of course, being within the scope of the following claims.

## Claims

1. A bale press for compressing crop on agricultural land, with a pick-up device (3) for picking up crop as well with a processing member comprising a chopping device (13) for chopping and/or crushing crop, said pick-up device (3) and said chopping and/or crushing device (13) being movable in height, **characterized in that** near its sides that are lateral relative to the direction of travel (A), the pick-up member (3) is connected to the frame of the bale press via arms (4) orientated in the direction of travel (A), **in that** near the sides of the bale press that are lateral relative to the direction of travel (A), the processing member (13) is connected to the frame via further arms (18) extending substantially horizontally and in the direction of travel (A), and **in that** a spacer device (21) is arranged between one of the further arms (18) for the processing member (13) and one of the arms (4) for the pick-up member (3), said spacer device (21) being pivotable near its two ends about a pivot shaft orientated horizontally and transversely to the direction of travel (A).

2. A bale press as claimed in claim 1, **characterized in that** the spacer device is adjustable in its longitudinal direction.

3. A bale press as claimed in any one of the preceding claims, **characterized in that** the pick-up device (3) and the chopping device (13) are drivable, simultaneously, at various circumferential speeds.

4. A bale press as claimed in any one of the preceding claims, **characterized in that** the drive of the chopping device (13) is independently variably adjustable.

5. A bale press as claimed in any one of the preceding claims, **characterized in that** the chopping device (13) comprises knives (15), such as "flail" knives, disposed pivotably about a shaft (16).

6. A bale press as claimed in any one of the preceding claims, **characterized in that** the bale press (1) is adapted to compress round bales.

7. A bale press as claimed in any one of the preceding claims, **characterized in that** the chopping device (13) extends approximately over the entire width of the bale press.

8. A bale press as claimed in any one of the preceding claims, **characterized in that** the bale press comprises bundling means for bundling or enveloping the compressed crop.

9. A bale press as claimed in any one of the preceding claims, **characterized in that** the processing device (13) is driven via a gear box (25) including changeable gear wheels.

## Patentansprüche

1. Ballenpresse zum Pressen von Gut auf einer landwirtschaftlichen Fläche mit einer Pick-up-Trommel (3) zum Aufnehmen von Gut sowie mit einem Bearbeitungsglied, das eine Häckselvorrichtung (13) zum Häckseln und/oder Quetschen von Gut umfaßt, wobei die Pick-up-Trommel (3) und die Häcksel- und/oder Quetschvorrichtung (13) höhenbewegbar sind,
**dadurch gekennzeichnet, daß** das Pick-up-Glied (3) nahe seinen relativ zur Arbeitsrichtung (A) seitlichen Seiten mit dem Rahmen der Ballenpresse über sich in Arbeitsrichtung (A) erstreckende Arme (4) verbunden ist, daß das Bearbeitungsglied (13) nahe den relativ zur Arbeitsrichtung (A) seitlichen Seiten der Ballenpresse mit dem Rahmen über weitere Arme (18) verbunden ist, die sich im wesentlichen horizontal und in Arbeitsrichtung (A) erstrecken, und daß ein Distanzhalter (21) zwischen einem der weiteren Arme (18) für das Bearbeitungsglied (13) und einem der Arme (4) für das Pick-up-Glied (3) angeordnet ist, wobei der Distanzhalter (21) nahe seinen beiden Enden um eine Schwenkachse schwenkbar ist, die horizontal und quer zur Arbeitsrichtung (A) ausgerichtet ist.

2. Ballenpresse nach Anspruch 1,
**dadurch gekennzeichnet, daß** der Distanzhalter in seiner Längsrichtung verstellbar ist.

3. Ballenpresse nach einem der vorhergehenden Ansprüche,
**dadurch gekennzeichnet, daß** die Pick-up-Trommel (3) und die Häckselvorrichtung (13) gleichzeitig mit unterschiedlichen Umfangsgeschwindigkeiten antreibbar sind.

4. Ballenpresse nach einem der vorhergehenden Ansprüche,
**dadurch gekennzeichnet, daß** der Antrieb der Häckselvorrichtung (13) unabhängig variabel einstellbar ist.

5. Ballenpresse nach einem der vorhergehenden Ansprüche,
**dadurch gekennzeichnet, daß** die Häckselvorrichtung (13) Messer (15), wie z. B. schlegelförmige Messer, umfaßt, die um eine Achse (16) drehbar angeordnet sind.

6. Ballenpresse nach einem der vorhergehenden Ansprüche,
**dadurch gekennzeichnet, daß** die Ballenpresse (1) dazu ausgelegt ist, Rundballen zu pressen.

7. Ballenpresse nach einem der vorhergehenden Ansprüche,
**dadurch gekennzeichnet, daß** sich die Häckselvorrichtung (13) etwa über die gesamte Breite der Ballenpresse erstreckt.

8. Ballenpresse nach einem der vorhergehenden Ansprüche,
**dadurch gekennzeichnet, daß** die Ballenpresse eine Bündelvorrichtung zum Bündeln oder Umwickeln des gepreßten Gutes umfaßt.

9. Ballenpresse nach einem der vorhergehenden Ansprüche,
**dadurch gekennzeichnet, daß** die Bearbeitungsvorrichtung (13) über ein Getriebe (25) mit Wechselgetrieberädern angetrieben wird.

## Revendications

1. Presse à balles pour comprimer une récolte sur une terre agricole, ayant un dispositif de ramassage (3) pour ramasser une récolte ainsi qu'un élément de traitement comprenant un dispositif de hachage (13) pour hacher et/ou écraser la récolte, ledit dispositif de ramassage (3) et ledit dispositif de hachage et/ou d'écrasement (13) étant mobiles en hauteur, **caractérisée en ce que**, à proximité de ses côtés qui sont latéraux par rapport à la direction de déplacement (A), l'élément de ramassage (3) est relié au cadre de la presse à balles par des bras (4) orientés dans la direction de déplacement (A), **en ce que**, à proximité des côtés de la presse à balles qui sont latéraux par rapport à la direction de déplacement (A), l'élément de traitement (13) est relié au cadre par d'autres bras (10) s'étendant sensiblement horizontalement et dans le sens du déplacement (A), et **en ce qu'**un dispositif d'écartement (21) est agencé entre l'un des autres bras (18) pour l'élément de traitement (13) et l'un des bras (4) pour l'élément de ramassage (3), ledit dispositif d'écartement (21) étant pivotable à proximité de ses deux extrémités autour d'un axe de pivot orienté horizontalement et transversalement par rapport à la direction de déplacement (A).

2. Presse à balles selon la revendication 1, **caractérisée en ce que** le dispositif d'écartement est réglable dans son sens longitudinal.

3. Presse à balles selon l'une quelconque des revendications précédentes, **caractérisée en ce que** le dispositif de ramassage (3) et le dispositif de hachage (13) peuvent être entraînés simultanément, à des vitesses circonférentielles différentes.

4. Presse à balles selon l'une quelconque des revendications précédentes, **caractérisée en ce que** l'entraînement du dispositif de hachage (13) est indépendamment réglable de façon variable.

5. Presse à balles selon l'une quelconque des revendications précédentes, **caractérisée en ce que** le dispositif de hachage (13) comprend des couteaux (15), tels que des couteaux de type "fléau", disposés de manière à pivoter autour d'un axe (16).

6. Presse à balles selon l'une quelconque des revendications précédentes, **caractérisée en ce que** la presse à balles (1) est conçue pour comprimer des balles rondes.

7. Presse à balles selon l'une quelconque des revendications précédentes, **caractérisée en ce que** le dispositif de hachage (13) s'étend approximativement sur l'ensemble de la largeur de la presse à balles.

8. Presse à balles selon l'une quelconque des revendications précédentes, **caractérisée en ce que** la presse à balles comprend des moyens d'emballage ou d'enveloppement pour emballer ou envelopper la récolte comprimée.

9. Presse à balles selon l'une quelconque des revendications précédentes, **caractérisée en ce que** le dispositif de traitement (13) est entraîné par le biais d'un boîtier d'engrenages (25) comprenant des roues d'engrenage changeables.
